# EUROPEAN PATENT APPLICATION

(11) **EP 4 716 080 A1**
(43) Date of publication of application: **25.03.2026**
(21) Application number: 24207628.9
(22) Date of filing: 18.10.2024
(51) Int. Cl.: H02M 1/00, H02M 1/10, H02M 1/36, G06F 1/26, G05F 1/14

(54) **POWER SUPPLY WITH STANDBY MODE**

(30) Priority: 19.09.2024 EP 24201485
(71) Applicant: Harman International Industries, Incorporated, Stamford, CT 06901 (US)
(72) Inventor: BARBER, David James Warwick, Salisbury, SP5 3FJ (GB)
(74) Representative: Rummler, Felix

(57) **Abstract**

A power supply and a method of operating a power supply. The power supply including a power input operable to receive a mains electric power, computing means comprising a processor, a first power supply unit (PSU) electrically coupled to the computing means, the first PSU operable to receive the mains electric power when the power supply is switched on and to provide power to the computing means. The power supply including a second PSU, a first switching means electrically coupled to the power input, to the first PSU and to the second PSU, the first switching means operable to divert the mains electric power to the first PSU or to the second PSU. The power supply including a second switching means operable to select a high voltage setting or a low voltage setting of the second PSU. The computing means are further electrically coupled to the first switching means and to the second switching means, and the processor is operable to measure the voltage of the mains electric power input to the first PSU. The processor is further operable to determine from the voltage measurement that the mains electric power is in a low voltage range or in a high voltage, wherein the low voltage range does not overlap with the high voltage range. The processor is further operable to operate the second switching means to the low voltage setting if the mains electric power is in the low voltage range or to the high voltage setting if the mains electric power is in the high voltage range. The processor is further operable to operate the first switching means, subsequent to operating the second switching means, from the first PSU to the second PSU to divert the mains electric power from the first PSU to the second PSU.

## Description

The present invention relates to a power supply with a standby mode, an amplifier including a power supply with a standby mode, and a method of operating a power supply with a standby mode.

### BACKGROUND OF THE INVENTION

Power supplies, such as transformers for amplifiers and other devices, are known to receive power from a source (typically, a mains electric power or supply) and to output power at a desired voltage to a device (such as circuitry for an amplifier). The desired voltage of the device may be higher than the power provided by the mains electric power or it may be lower than the mains electric power. Accordingly, power supplies may include a step-up transformer or a step-down transformer. Most of the world population (Europe, Africa, Asia, Australia, New Zealand, and much of South America) use a supply that is within 6% of 230 V. In the United Kingdom and Australia the nominal supply voltage is 230 V +10%/-6% to accommodate the fact that most power supplies/transformers are in fact still set to 240 V. The 230 V standard has become widespread so that 230 V equipment can be used in most parts of the world with the aid of an adapter or a change to the equipment's plug to the standard for the specific country. The United States and Canada use a supply voltage of 120 volts ± 6%.

There is a need in the industry to provide a power supply that can detect which region it is operating in (i.e. whether the voltage is within 230 Volt or within 120 Volt). Some power supplies have been provided which have a manual selection switch to be operated by a user, the manual switch selecting a low or high voltage option on the power supply, thereby ensuring that the output voltage of the power supply is constant. However, this has multiple unaddressed problems. The output voltage can drastically be varied to a point which could damage any devices (or even the power supply) if a user does not select the correct manual switch (for example, if the 230 Volt switch is selected when the mains electric power is at or around 115 Volt or vice versa). This can have catastrophic effects on the electrical components and can lead to a safety risk as well. Furthermore, the secondary windings on an output side of the transformer provide a voltage that is directly proportional to the voltage input into the primary windings on an input side of the transformer. Voltage spikes on the mains electric power (for example, voltage that is above 230 Volt in the 230 Volt setting) therefore lead to voltage spikes on the output side which can be fed directly into a device powered by the transformer. This can cause the device powered by the transformer to malfunction or to operate at reduced efficiency. Similarly, voltage drops on the mains electric supply lead to voltage drops on the output side which can also lead to the device powered by the transformer to malfunction.

Modem day power supplies can be placed in standby operation modes when the device(s) powered by the power supply is not being operated. The standby operation mode is typically a mode in which the power supply uses less power than when it is switched on. In the standby operation mode, power supplies typically only keep essential features of the power supply enabled to allow the power supply to be switched on quickly. As a trade-off, standby modes are less efficient than switching the power supply device off entirely because some power is still drawn. There is a need to provide standby power modes of power supplies with lower energy consumption.

Accordingly, there is a need in the industry to improve power supplies that can provide power at a constant voltage to devices in an efficient and dynamic manner. It is an aim of this invention to address the above-mentioned issues.

### SUMMARY

To achieve the above objectives, the invention sets out a power supply, an amplifier and a method of operating a power supply as in the claims below.

In a preferred embodiment, a power supply is provided. The power supply includes a power input operable to receive a mains electric power, computing means that include a processor, and a first power supply unit (PSU). The first PSU is electrically coupled to the computing means. The first PSU is operable to receive the mains electric power when the power supply is switched on and to provide power to the computing means. The power supply includes a second PSU. The power supply includes a first switching means electrically coupled to the power input, to the first PSU and to the second PSU, the first switching means operable to divert the mains electric power to the first PSU or to the second PSU. The power supply includes a second switching means operable to select a high voltage setting or a low voltage setting of the second PSU. The computing means are further electrically coupled to the first switching means and to the second switching means. The processor of the computing means is operable to measure the voltage of the mains electric power input to the first PSU and to determine from the voltage measurement that the mains electric power is in a low voltage range or in a high voltage, wherein the low voltage range does not overlap with the high voltage range. The processor of the computing means is operable to operate the second switching means to the low voltage setting if the mains electric power is in the low voltage range or to the high voltage setting if the mains electric power is in the high voltage range. The processor of the computing means is operable to operate the first switching means, subsequent to operating the second switching means, from the first PSU to the second PSU to divert the mains electric power from the first PSU to the second PSU.

By providing a power supply with two separate power supply units, the ancillary functions of the power supply (such as powering up the unit, detecting which region the power supply is being used in, maintaining a low-power standby mode, etc.) can be separated from the main function of the power supply unit (such as being a power transformer/amplifier). This has a number of advantageous features. For example, ancillary functions which require less power than the main power supply function can be performed by a smaller (and lower power) ancillary power supply unit (in the above case, the first PSU). Accordingly, ancillary functions can be active while the main power supply function is disabled (for example, during a low-power standby mode). Thus, the power supply unit of the embodiment can detect and subsequently select a low or high voltage range (i.e. detect which region the power supply is being used in) in a low-power standby mode without powering up the main power supply function (i.e. the second PSU which may be a high power transformer). This reduces the amount of power drawn during a standby mode (compared to running a higher power PSU, such as the second PSU in an idle state during a standby mode) and enables region detection during the standby mode. Furthermore, efficiency of the main power supply unit is improved because the ancillary functions are first performed by the ancillary power supply unit and, once those features have been performed, the first switching means switches all of the mains electric power from the ancillary power supply unit to the mains power supply unit. In other words, some of the ancillary functions (such as ancillary functions required during a low power standby and during the transition from the low power standby mode to an "on" mode of the power supply) are no longer performed and all of the mains electric power is passed through the main power supply unit, thus increasing the efficiency of the mains power supply unit. Providing a computer detected and powered switch to the low voltage range or the high voltage reduces human error when selecting the correct voltage range and prevents damage to the power supply.

In an embodiment, the first switching means includes a main start switch operable to divert the mains electric power to the first PSU or to the second PSU, and a soft start switch coupled in parallel to the main start switch, the soft start switch operable to provide the mains electric power to the second PSU when the soft start switch is engaged. Operating the first switching means further includes the processor to switch on the second PSU while keeping the first PSU switched on by engaging the soft start switch, subsequently to operate the main start switch from the first PSU to the second PSU, and subsequently to disengage the soft start switch.

Advantageously, a smooth transition of power can be provided between the ancillary power supply unit and the main power supply unit. This allows for the computing means of the ancillary supply unit to switch off without errors and also ensures that the main power supply unit is switched on properly before the main switch from the ancillary power supply unit and the main power supply unit is operated.

In an embodiment, the processor is further operable to measure the voltage of an output power of the second PSU when the soft start switch is engaged and when the main switch is switched to the first PSU. The processor is further operable to operate the main start switch from the first PSU to the second PSU if the measured voltage is within a predetermined threshold range. The processor is further operable to disengage the soft start switch and maintain the main start switch in a position where mains electric power is provided to the first PSU if the measured voltage is above or below the predetermined range.

Advantageously, the computing means can monitor the power of the main power supply unit to ensure that the voltage on the output side of the main power supply unit (for example, on a secondary set of windings of the second PSU) starts to come up and that it reaches the expected voltage. If this does not happen, it is likely that there is a fault in the system which could damage components of the power supply or of a device coupled to the output of the main power supply unit. This damage is prevented by monitoring the power on the output side of the main power supply unit and by disengaging the main power supply unit if the measured voltage is above or below a predetermined range. In this situation, a fault report may be recorded by the computing means.

In an embodiment, the second PSU is a transformer including a plurality of primary windings operable to receive the mains electric power in the low voltage range or the high voltage range and a plurality of secondary windings operable to provide an output power. The power supply further includes a third switching means electrically coupled to the second PSU and to the computing means, the third switching means operable to select one of a plurality of taps on the primary windings of the second PSU such that the voltage of the output power on the second windings is constant. The processor is further operable to determine whether the voltage in the low voltage range is above a first threshold voltage or whether the voltage in the high voltage range is above a second threshold voltage. Alternatively, the processor is further operable to determine whether the voltage in the low voltage range is below a third threshold voltage or whether the voltage in the high voltage range is below a fourth threshold voltage. The processor is further operable to operate the third switching means when the voltage in the low voltage range is above the first threshold voltage, the voltage in the high voltage range is above the second threshold voltage, the voltage in the low voltage range is below the third threshold voltage, or the voltage in the high voltage range is below the fourth threshold voltage.

Although mains voltage is typically regulated and, therefore, can usually be predicted to be at or near a predetermined voltage, mains voltage still exhibits unpredictable spikes in voltage. For example, a regulated voltage might be 230 Volt. However, the mains voltage received at the power supply unit could be well above or below this value (for example, it may be 200 Volt or 260 Volt). When the main power supply unit is a transformer and the output voltage is expected to power a device at a specific voltage, a voltage that is well above or below the expected 230 Volt range causes the output voltage to be well above or well below the voltage required to power the device. This can cause the device to be damaged. By selecting a tap on the primary windings of the transformer when the measured voltage (in the higher voltage range or the lower voltage range) is above or below a threshold voltage, the output voltage can be maintained at constant rate. For example, when the voltage of the mains electric power is 10% above the expected regulated voltage, the processor can operate the third switching means to select a tap on the primary windings of the transformer that has 10% more windings. With the use of Faraday's law, the output voltage is thus maintained. Furthermore, this process happens automatically and dynamically by measuring the voltage with the processor of the computing means and by operating the third switching means with the processor of the computing means according to the measured voltage. This reduces human error and ensures that the device powered by the transformer is not damaged due to voltage fluctuation and can run efficiently.

In an embodiment, the third switching means includes a first switch operable to select a low voltage tap when the voltage in the low voltage range is at a predetermined low voltage or to select a first tap with more windings than the low voltage tap when the voltage in the low voltage range is above the first threshold voltage. Alternatively or additionally, the third switching means includes a second switch operable to select a high voltage tap when voltage in the high voltage range is at a predetermined high voltage or to select a second tap with more windings than the high voltage tap when the voltage in the high voltage range is above the second threshold voltage. Alternatively or additionally, the third switching means includes a third switch operable to select the low voltage tap when then voltage in the low voltage range is at the predetermined low voltage or to select a third tap with less windings than the low voltage tap when the voltage in the low voltage range is below the third threshold voltage. Alternatively or additionally, the third switching means includes a fourth switch operable to select the high voltage tap when then voltage in the high voltage range is at the predetermined high voltage or to select a fourth tap with less windings than the high voltage tap when the voltage in the high voltage range is below the fourth threshold voltage.

Advantageously by providing multiple different types of switches operated by the processor of the computing means, damage to the device powered by the transformer can be prevented irrespective of whether the transformer is operating with voltage fluctuations in the lower voltage range or voltage fluctuations in the higher voltage range. Furthermore, the power supply can adapt the output voltage of the transformer for multiple different type of voltage fluctuations, such as the voltage being higher than the expected voltage (for example, 125 Volt in a 115 Volt region or 260 Volt in a 230 Volt region) or the voltage being lower than the expected voltage (for example, 90 Volt in a 115 Volt region or 200 Volt in a 230 Volt region). This is particularly useful in Class A Power Amplifier products where amplifier efficiency affects the heat dissipated into the product heatsink/casework. High incoming mains voltage can mean excessive heat results in failing safety margins due to legal limits that govern the maximum temperature a touchable surface can reach. There is also a maximum safe operating temperature of the power transistors of amplifiers that cannot be exceeded. By having an additional tap on the primary windings this can be switched in to lower the output voltage into safe operating margins, without having to compromise the specified power output of the amplifier under normal operating conditions.

In an embodiment, the first threshold voltage is 10% above the predetermined low voltage and the first tap has 10% more windings than the low voltage tap. The second threshold voltage is 10% above the predetermined high voltage and the second tap has 10% more windings than the high voltage tap. The third threshold voltage is 10% below the predetermined low voltage and the third tap has 10% less windings than the low voltage tap. The fourth threshold voltage is 10% below the predetermined high voltage and the fourth tap has 10% less windings than the high voltage tap.

In an embodiment, the predefined low voltage is from 90 Volt to 140 Volt and wherein the predefined high voltage is from 190 Volt to 270 Volt. Advantageously, the power supply can operate in the majority of countries in the world.

In a preferred embodiment, an amplifier is provided. The amplifier includes the power supply as defined above.

In a preferred embodiment, a method of operating a power supply, as defined above, is provided. The method includes receiving, from the power input, the mains electric power. The method includes diverting the mains electric power, by the first switching means, to the first PSU. The method includes measuring, by processor, the voltage of the mains electric power input to the first PSU. The method includes determining from the voltage measurement, by the processor, that the mains electric power is in a low voltage range or in a high voltage range, wherein the low voltage range does not overlap with the high voltage range. The method includes receiving a command to switch on the power supply from a low-power mode. The method includes operating, by the processor, the second switching means to the low voltage setting if the mains electric power is in the low voltage range or to the high voltage setting if the mains electric power is in the high voltage range. The method includes receiving a command to switch on the power supply from a low-power mode. The method includes operating, by the processor, the first switching means, subsequent to operating the second switching means, from the first PSU to the second PSU to divert the mains electric power from the first PSU to the second PSU.

By providing a method of operating a power supply with two separate power supply units, the ancillary functions of the power supply (such as powering up the unit, detecting which region the power supply is being used in, maintaining a low-power standby mode, etc.) can be separated from the main function of the power supply unit (such as being a power transformer/amplifier). This has a number of advantageous features. For example, ancillary functions which require less power than the main power supply function can be performed by a smaller (and lower power) ancillary power supply unit (in the above case, the first PSU). Accordingly, ancillary functions can be active while the main power supply function is disabled (for example, during a low-power standby mode). Thus, the power supply unit of the embodiment can detect and subsequently select a low or high voltage range (i.e. detect which region the power supply is being used in) in a low-power standby mode without powering up the main power supply function (i.e. the second PSU which may be a high power transformer). This reduces the amount of power drawn during a standby mode and enables region detection during the standby mode. Furthermore, efficiency of the main power supply unit is improved because the ancillary functions are first performed by the ancillary power supply unit and, once those features have been performed, the first switching means switches all of the mains electric power from the ancillary power supply unit to the mains power supply unit. In other words, some of the ancillary functions (such as ancillary functions required during a low power standby and during the transition from the low power standby mode to an "on" mode of the power supply) are no longer performed and all of the mains electric power is passed through the main power supply unit, thus increasing the efficiency of the mains power supply unit. Providing a computer detected and powered switch to the low voltage range or the high voltage reduces human error when selecting the correct voltage range and prevents damage to the power supply.

In an embodiment, the first switching means includes a main start switch operable to divert the mains electric power to the first PSU or to the second PSU, and a soft start switch coupled in parallel to the main start switch, the soft start switch operable to provide the mains electric power to the second PSU when the soft start switch is engaged. Operating the first switching means further includes switching on, by the processor, the second PSU while keeping the first PSU switched on by engaging the soft start switch. Operating the first switching means further includes subsequently operating, by the processor, the main start switch from the first PSU to the second PSU. Operating the first switching means further includes subsequently disengaging, by the processor, the soft start switch.

Advantageously, a smooth transition of power can be provided between the ancillary power supply unit and the main power supply unit. This allows for the computing means of the ancillary supply unit to switch off without errors and also ensures that the main power supply unit is switched on properly before the main switch from the ancillary power supply unit and the main power supply unit is operated.

In an embodiment, the method further includes measuring, by the processor, the voltage of an output power of the second PSU when the soft start switch is engaged and when the main switch is switched to the first PSU. The method further includes operating, by the processor, the main start switch from the first PSU to the second PSU if the measured voltage is within a predetermined threshold range. The method further includes disengaging, by the processor the soft start switch and maintain the main start switch in a position where mains electric power is provided to the first PSU if the measured voltage is above or below the predetermined range.

Advantageously, the computing means can monitor the power of the main power supply unit to ensure that the voltage on the output side of the main power supply unit starts to come up and that it reaches the expected voltage. If this does not happen, it is likely that there is a fault in the system which could damage components of the power supply or of a device coupled to the output of the main power supply unit. This damage is prevented by monitoring the power on the output side of the main power supply unit and by disengaging the main power supply unit if the measured voltage is above or below a predetermined range. In this situation, a fault report may be recorded by the computing means.

In an embodiment, the second PSU is a transformer including a plurality of primary windings operable to receive the mains electric power in the low voltage range or the high voltage range and a plurality of secondary windings operable to provide an output power, and the power supply further includes a third switching means electrically coupled to the second PSU and to the computing means, the third switching means operable to select one of a plurality of taps on the primary windings of the second PSU such that the voltage of the output power on the second windings is constant. The method further includes determining, by the processor, whether voltage in the low voltage range is above a first threshold voltage or whether the voltage in the high voltage range is above a second threshold voltage. Alternatively, the method further includes determining, by the processor, whether the voltage in the low voltage range is below a third threshold voltage or whether the voltage in the high voltage range is below a fourth threshold voltage. The method further includes operating, by the processor, the third switching means when the voltage in the low voltage range is above the first threshold voltage, the voltage in the high voltage range is above the second threshold voltage, the voltage in the low voltage range is below the third threshold voltage, or the voltage in the high voltage range is below the fourth threshold voltage.

Although mains voltage is typically regulated and, therefore, can usually be predicted to be at or near a predetermined voltage, mains voltage still exhibits unpredictable spikes in voltage. For example, a regulated voltage might be 230 Volt. However, the mains voltage received at the power supply unit could be well above or below this value (for example, it may be 200 Volt or 260 Volt). When the main power supply unit is a transformer and the output voltage is expected to power a device at a specific voltage, a voltage that is well above or below the expected 230 Volt range causes the output voltage to be well above or well below the voltage required to power the device. This can cause the device to be damaged. By selecting a tap on the primary windings of the transformer when the measured voltage (in the higher voltage range or the lower voltage range) is above or below a threshold voltage, the output voltage can be maintained at constant rate. For example, when the voltage of the mains electric power is 10% above the expected regulated voltage, the processor can operate the third switching means to select a tap on the primary windings of the transformer that has 10% more windings. With the use of Faraday's law, the output voltage is thus maintained. Furthermore, this process happens automatically and dynamically by measuring the voltage with the processor of the computing means and by operating the third switching means with the processor of the computing means according to the measured voltage. This reduces human error and ensures that the device powered by the transformer is not damaged due to voltage fluctuation and can run efficiently.

In an embodiment, the method further includes selecting a low voltage tap of a first switch of the third switching means when the voltage in the low voltage range is at a predetermined low voltage or selecting a first tap of the first switch with more windings than the low voltage tap when the voltage in the low voltage range is above the first threshold voltage. Alternatively or additionally, the method further includes selecting a high voltage tap of a second switch of the third switching means when the voltage in the high voltage range is at a predetermined high voltage or selecting a second tap of the second switch with more windings than the high voltage tap when the voltage in the high voltage range is above the second threshold voltage. Alternatively or additionally, the method further includes selecting a low voltage tap of a third switch of the third switching means when voltage in the low voltage range is at the predetermined low voltage or selecting a third tap of the third switch with less windings than the low voltage tap when the voltage in the low voltage range is below the third threshold voltage. Alternatively or additionally, the method further includes selecting a high voltage tap of a fourth switch of the third switching means when the voltage in the high voltage range is at the predetermined high voltage or selecting a fourth tap of the fourth switch with less windings than the high voltage tap when the voltage in the high voltage range is below the fourth threshold voltage.

Advantageously by providing multiple different types of switches operated by the processor of the computing means, damage to the device powered by the transformer can be prevented irrespective of whether the transformer is operating with voltage fluctuations in the lower voltage range or voltage fluctuations in the higher voltage range. Furthermore, the power supply can adapt the output voltage of the transformer for multiple different type of voltage fluctuations, such as the voltage being higher than the expected voltage (for example, 125 Volt in a 115 Volt region or 260 Volt in a 230 Volt region) or the voltage being lower than the expected voltage (for example, 90 Volt in a 115 Volt region or 200 Volt in a 230 Volt region). This is particularly useful in Class A Power Amplifier products where amplifier efficiency affects the heat dissipated into the product heatsink/casework. High incoming mains voltage can mean excessive heat results in failing safety margins. By having an additional tap on the primary windings this can be switched in to lower the output voltage into safe operating margins, without having to compromise the specified power output of the amplifier under normal operating conditions.

In an embodiment, the method further includes receiving a command to switch the power supply to a low-power mode and engaging, by the processor, the soft start switch. The method further includes subsequently operating, by the processor, the main start switch from the second PSU to the first PSU to switch on the first PSU while the second PSU is switched on. The method further includes subsequently disengaging the soft start switch to switch off the second PSU while the first PSU is switched on.

Advantageously, seamless transition between the operation of the main power supply unit and the ancillary power supply unit can be provided and the power supply can be placed in a more efficient low-power standby mode in which only the ancillary power unit is powered and no power is provided to the main power supply unit.

In an embodiment, the method further includes continuously measuring, by the processor, the voltage of the mains electric power input to the first PSU. The method further includes operating, by the processor, the second switching means to the low voltage setting if the mains electric power is in the low voltage range or to the high voltage setting if the mains electric power is in the high voltage range.

Advantageously, the power supply can be switched into a low-power standby mode that is more efficient because only the first PSU (a lower power supply unit) needs to be powered, rather than the higher powered second PSU (which may be a toroidal transformer that pulls a relatively large amount of power when in standby mode). This provides a power supply that meets the more stringent requirements of the European Union's Energy-Related Products (ErP) Directive.

### BRIEF DESCRIPTION OF THE DRAWINGS

The features, objects, and advantages of the present disclosure will become more apparent from the detailed description set forth below when taken in conjunction with the drawings in which like reference numerals refer to similar elements.
Figure 1 depicts a diagram of a power supply, according to the invention;
Figure 2 shows a detailed diagram of the power supply of Figure 1, according to the invention;
Figure 3 shows a detailed diagram of computing means of the power supply of Figures 1 and 2, according to alternative embodiments of the invention;
Figure 4 shows a detailed diagram of switching means of the power supply of Figures 1, 2 and 3, according to alternative embodiments of the invention;
Figure 5 shows a detailed diagram of a power supply unit of the power supply of Figures 1, 2, 3 and 4, according to alternative embodiments of the invention;
Figure 6 depicts a flow chart of a method of operating a power supply, according to the invention; and
Figure 7 depicts a flow chart of further methods of operating a power supply, according to alternative embodiments of the invention.

### DETAILED DESCRIPTION

A power supply for an amplifier can provide large amounts of power to the amplifier when the power supply is switched on. Typical Class A/B amplifiers can be rated at 100 watts and sometimes as high as 500 watts. During normal operation, a typical amplifier will not pull this amount of power all the time. For example, a typical amplifier runs at 25% efficiency during an idle mode (i.e. when the amplifier is switched on, but no load is required by the amplifier because no music is being played back by drivers coupled to the amplifier). During the idle mode, a typical amplifier rated at 100 watts may only consume 25 watts and a typical amplifier rated at 500 watts may only consume 125 watts. Despite the relative low consumption of Class A/B amplifiers during an idle state, there is an increasing demand (for example, from the European Union's Energy-Related Products (ErP) Directive) to provide more efficient amplifiers with an even lower power consumption during an idle mode.

The present invention provides a power supply that includes a standby switched mode power supply that can be operated during an idle mode or in replacement of the idle mode. The standby switched mode power supply is a low power mode that consumes significantly less power than 25% of an amplifier's rating. The power supply of the present invention can be used for amplifiers and streaming amplifiers in personal and commercial HiFi systems (such as Class A/B/G amplifiers) or in any other suitable amplifier apparatus.

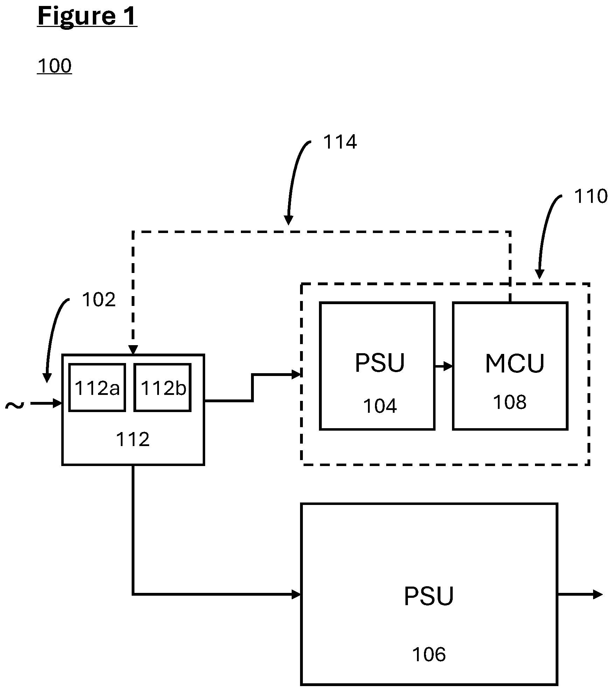

Figure 1 depicts a power supply 100 according to the invention. The power supply 100 includes a power input 102, a first power supply unit (PSU) 104 (i.e. a standby switched mode power supply) and a second PSU 106. The power input 102 is operable to receive a mains electric power. For example, the power input 102 may be an electrical cable that can be plugged into a wall socket or a mains electricity socket. Alternatively, the power input 102 may be operable to receive an electrical connection (for example, a power cable) that can supply a mains electric power to the power supply 100. Mains electric power refers to mains electricity, grid power or supply voltage and is the electrical power (typically in an alternating current) that is delivered to homes and businesses (for example, through the electrical grid). Mains electric power is typically regulated in most countries around the world (for example, in the United Kingdom mains electric power is regulated to be within a certain percentage of 230 volts, in the United States and Canada mains electric power is regulated to be within a certain percentage of 120 volts). The first PSU 104 and the second PSU 106 are coupled to the power input 102 such that the first PSU 104 and the second PSU 106 can each be powered by the power input 102. The second PSU 106 is the main power supply unit of the power supply 100 and provides power to any device(s) powered by the power supply 100 (for example, an amplifier powered by the power supply 100, one or more channels of an amplifier, each of the one or more channels coupled to one or more speakers or drivers, and so on). In an embodiment, the power supply 100 is rated to receive a power input from 90 volts to 270 volts AC input at either 50Hz or 60Hz. In an embodiment, the power supply 100 may be rated to receive a power input from 90 volts to 300 volts AC input at either 50Hz or 60Hz, from 80 volts to 300 volts AC input at either 50Hz or 60Hz, or from 80 volts to 310 volts AC input at either 50Hz or 60Hz to accommodate high AC voltage peaks in countries where a regulated AC voltage value is not strictly enforced. Advantageously, the power supply 100 may be utilized safely in multiple countries of the world.

The power supply 100 includes computing means 108 which has a processor operable to carry instructions and a memory operable to store data (for example, the instructions). The computing means 108 may be a microcontroller unit (MCU) or any other suitable computing means. The first PSU 104 is electrically coupled (for example, by means of an electrical wire or cable) to the computing means 108 such that the first PSU 104 provides power to the computing means 108 when the mains electric power is supplied to the first PSU 104. In an embodiment, the first PSU 104 and the computing means 108 may be part of a single component 110. Alternatively, the first PSU 104 and the computing means 108 may be separate to each other.

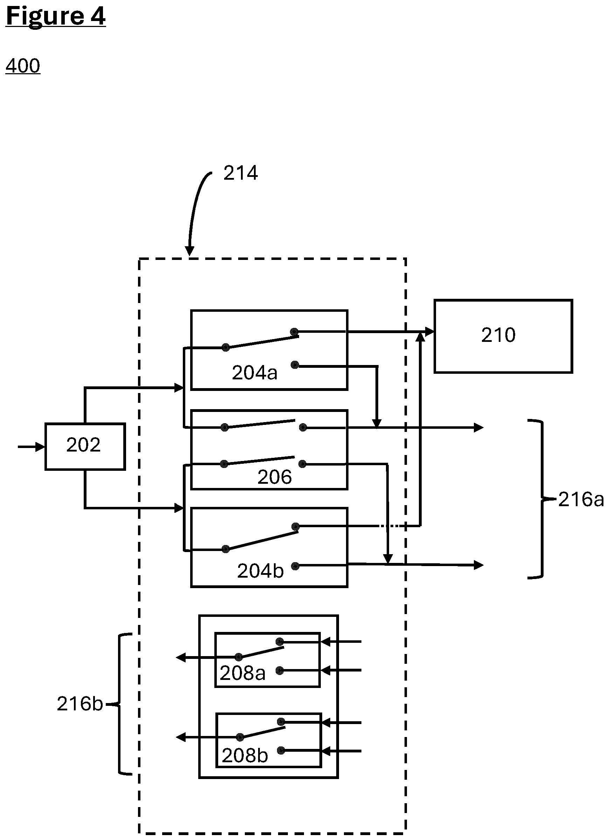

The power supply 100 includes a plurality of switching means 112 operable to control the operation of the power supply 100. The switching means 112 are electrically coupled (for example, by means of an electrical wire or cable 114) to the computing means 108 such that the computing means provides power to each of the switching means 112. Some or all of the plurality of switching means 112 may be transistors, relays or any other suitable type of electrical switch that can be operated by computing means as described in more detail with regard to figure 4.

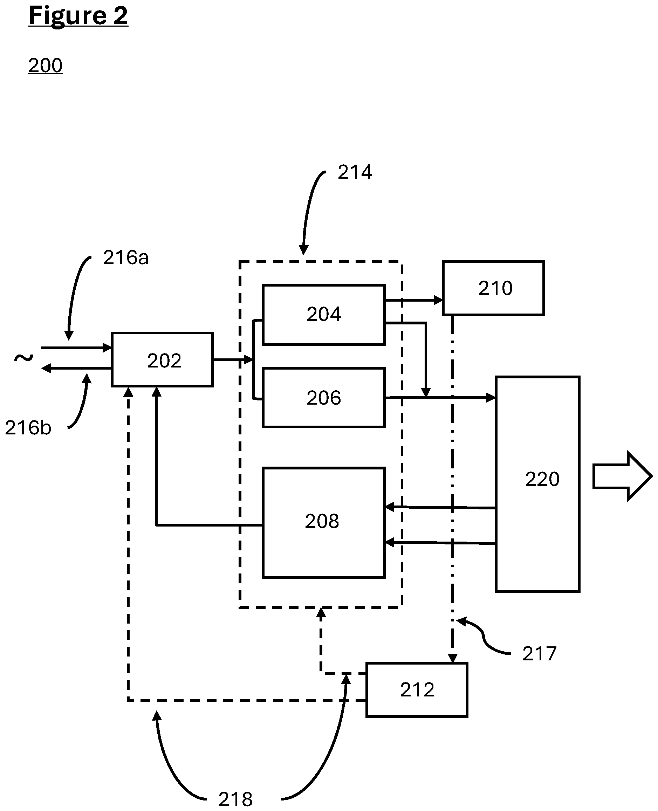

The plurality of switching means 112 include first switching means 112a and second switching means 112b. The plurality of switching means 112 are not limited to first switching means 112a and second switching means 112b and may include further switching, for example, as described below with regard to figures 2 to 4. The first switching means 112a is electrically coupled on an input end to the power input 102. The first switching means 112a is electrically coupled on an output end to the first PSU 104 and to the second PSU 106. The first switching means 112a is operable to receive the mains electric power from the power input 102 and, depending on a signal received from the computing means 108, divert the mains electric power to the first PSU 104 or to the second PSU 106. The first switching means 112a has a default position towards the first PSU 104. Accordingly, when the power supply 100 is switched on, the mains electric power is first provided to the first PSU 104 such that the first PSU 104 is operable to receive the mains electric power when the power supply is switched on, and the first PSU 104 is operable to provide power to the computing means 108.

The second switching means 112b is electrically coupled to the power input 102, to the computing means 108 and to the second PSU 106. The second switching means 112b is operable to receive a signal from the computing means 108 and, subsequent to receiving the signal, select a high voltage setting or a low voltage setting of the second PSU 106. The low voltage setting may be selected when it is determined by the computing means 108 that the mains electric power received at the power input 102 has a voltage in a first voltage range (or low voltage range). For example, the first voltage range (or low voltage range) may be around 100 volts to 120 volts. The first voltage range (or low voltage range) may correspond to a regulated voltage range of a different geographic region, such as the United States or Canada. The high voltage setting may be selected when it is determined by the computing means 108 that the mains electric power received at the power input 102 has a voltage in a second voltage range (or a high voltage range). The second voltage range (or high voltage range) may be double that of the first voltage range (or low voltage range). For example, the second voltage range (or high voltage range) may correspond to a regulated voltage range of a geographic region, such as the European Union, the United Kingdom, various countries in Asia, various countries in Africa, various countries in South America, and so on. The second voltage range (or high voltage range) may be around 200 volts to 240 volts. Accordingly, the second switching means 112b provides a power supply 100 that can be used in multiple different regions of the world, irrespective of voltage differences in the different regions. Furthermore, because the second switching means 112b is powered and operated by the computing means 108, the low voltage setting or the high voltage setting are applied automatically by the power supply 100 without user input. This prevents incorrect selection of a low voltage setting when the mains electric power at power input 102 is at the first voltage range (or high voltage range), or selection of a high voltage setting when the mains electric power at power input 102 is at the second voltage range (or low voltage range). Incorrect selection of the low voltage setting or high voltage setting can lead to catastrophic failure of the power supply, catastrophic failure of any devices powered by the power supply (for example, an amplifier powered by the power supply, any speakers or drivers connected to the amplifier, and so on), and/or personal injury.

The computing means 108 are powered by the first PSU 104 and the computing means 108 are electrically coupled to each of the plurality of switching means 112 (i.e. the computing means 108 are electrically coupled to the first switching means 112a and to the second switching means 112b). When the power input 102 receives the mains electric power (for example, because the power supply 100 is plugged into a mains socket/wall socket), the power supply 100 may be in a first operation mode which may be a default mode of operation. The first operation mode is a low-power mode, also referred to as a standby mode. The power supply 100 may receive a request (for example, a click of a physical or virtual button by a user, a received signal from a different device or program) to switch the power supply 100 from the standby mode to an "on" mode and to provide power to the device(s) powered by the power supply.

In the standby mode, the first switching means 112a is in a default position to select the first PSU 104, thereby providing the mains electric power to the first PSU 104 and to the computing means 108. During the standby mode, the processor of the computing means 108 measures the voltage of the mains electric power input provided to the first PSU 104. Subsequent to the measurement, the processor of the computing means 108 compares the voltage measurement to a predetermined set of voltage ranges stored in memory of the computing means 108. The predetermined set of voltage ranges may correspond to the first voltage range (or low voltage range) and the second voltage range (or high voltage range) as described above. Based on the voltage measurement and the predetermined set of voltage ranges stored in the memory of the computing means 108, the processor of the computing means determines that the measured voltage is in the first voltage range (also referred to as the low voltage range) or that the measured voltage is in the second voltage range (also referred to as the high voltage range). The low voltage range may be roughly half of the high voltage range and the low voltage range does not overlap with the high voltage range. The processor of the computing means 108 operates the second switching means 112b to a low voltage setting of the second PSU 106 if the mains electric power is in the low voltage range. Alternatively, the processor of the computing means 108 operates the second switching means 112b to a high voltage setting of the second PSU 106 if the mains electric power is in the high voltage range. Accordingly, the correct voltage setting of the second PSU 106 is chosen corresponding to the voltage of the mains electric power, before the second PSU 106 (i.e. the main power supply) is switched on. By selecting the correct voltage setting before switching on the second PSU 106, damage to electronic devices or injury to a user are prevented.

If, after operating the second switching means 112b, the request to switch the power supply 100 from the standby mode to the "on" mode is received, the processor of the computing means 108 operates the first switching means 112a from the first PSU 104 to the second PSU 106 to divert the mains electric power from the first PSU 104 to the second PSU 106. This switches off the first PSU 104 and one or more ancillary functions (for example, the voltage measurement, and/or any other function required during a standby mode of the power supply) and switches on the second PSU 106 and, thus, the device(s) powered by the second PSU 106 and, thus, completes the transition from the standby mode to the "on" mode. In an embodiment, switching off the first PSU 104 may also switch off the computing means 108. In an alternative embodiment, the second PSU 106 may include a separate winding on an output side (for example, a separate winding of a plurality of secondary windings of the second PSU 106 as described below). The separate winding on the output side of the second PSU 106 may be electrically connected (for example, via a wire, cable or any other suitable connection to provide electric power) to the computing means 108. Accordingly, the computing means 108 may remain switched on during the standby mode of the power supply 100, during an "on" mode of the power supply 100, and during a transition mode from the standby mode to the "on" mode of the power supply 100. In an embodiment, the request to switch the power supply 100 from the standby mode to the "on" mode may be received before operating the second switching means. In this embodiment, the processor of the computing means 108 performs the steps in the same order as described above except that the processor proceeds from the switching of the second switching means 112b to switching of the first switching means 112a without waiting for a further request to switch the power supply 100 from the standby mode to the "on" mode.

In an embodiment, the first PSU 104 is a switched mode power supply (SMPS) that includes a transformer and an alternating current (AC) to digital current (DC) power converter. The first PSU 104 can meet low power standby requirements, such as those stipulated by the ErP Directive described above. For example, the first PSU 104 may receive AC input voltages in the first voltage range or the second voltage range as described above, and may deliver an output voltage of 5 volt to the computing means 108 at up to 5 watts when the computing means 108 is performing the switch from the standby mode to the "on" mode, and as low as watts or 0.5 watts when the computing means 108 is operating the power supply 100 in the standby mode.

In an embodiment, the second PSU 106 may be a high power supply unit operable to provide power to main components, such as device(s) coupled to the power supply 100. The device(s) may be an amplifier (such as a class A/B/G amplifier) coupled to one or more channels each operable to drive one or more drivers or loudspeakers. The second PSU 106 may be a step-up transformer or it may be a step-down transformer including primary windings (a primary rail) operable to receive the mains electric power and secondary windings (a secondary rail) operable to deliver a stepped-up or stepped-down voltage to the device(s) or amplifier. The second PSU 106 may be a toroidal transformer or any other suitable transformer operable to step-up or step-down the voltage of the mains electric power. In an embodiment, the low voltage setting of the second PSU 106 may include tapping a low voltage winding on the primary windings of the second PSU 106 whereas the high voltage setting of the second PSU 106 may include tapping a high voltage winding on the primary windings. The low voltage setting of the second PSU 106 may include tapping a first number of windings of the second PSU 106 and the high voltage setting of the second PSU 106 may include tapping twice the first number of windings of the second PSU 106.

In an embodiment, the power supply 100 is an amplifier or part of an amplifier (for example, a class A/B/G amplifier) and the amplifier is operable to provide power to one or more device(s), wherein the one or more device(s) may be one or more channels each operable to drive one or more drivers or loudspeakers.

By providing a power supply 100 with two separate power supply units (for example, the first PSU 104 and the second PSU 106), ancillary functions of the power supply (such as powering up the power supply 100 and any device(s) coupled to the power supply (for example an amplifier) from a standby mode to an "on" mode as described above, detecting which region the power supply 100 is being used in as described above, and maintaining the low-power standby mode as described above, etc.) can be separated from the main function of the power supply unit (such as being a power supply unit or transformer for an amplifier). This has a number of advantageous features. For example, the ancillary functions can all be powered by the computing means 108 which, as described above, may be a microcontroller unit. Such computing means 108 require much less power than an idle mode of a class A/B amplifier as described above. Accordingly, the first PSU 104 can be a low power PSU that requires much less power than the second PSU 106. Since the second PSU 106 is only switched on when the power supply 100 is in the "on" mode and is entirely switched off when the power supply 100 is in the standby mode, this leads to a large increase in power savings and efficiency of the power supply 100. Accordingly, ancillary functions can be active while the main power supply function (powered by the second PSU 106) is disabled (for example, during the low-power standby mode). The computing means 108 may, for example, carry out the operations as described above with a power rating of between 0.5 watts and 5 watts. This is significantly lower than a 100 watt rated amplifier consuming 25 watts of power during an idle mode, as described above.

Furthermore, the power supply unit 100 of the embodiment can detect and subsequently select a low or high voltage range (i.e. detect which region the power supply is being used in) in the low-power standby mode without powering up the main power supply function (i.e. the second PSU 106). This further reduces the amount of power drawn during the standby mode and enables region detection during the standby mode. By selecting the region mode without any current passing through the second PSU 106 (which may be a large transformer), electric devices may be prevented from being damaged and personal injury may be prevented from incorrect switching.

By providing an arrangement with a dedicated power supply unit (i.e. the second PSU 106) for the main power supply function of the power supply 100 (i.e. supplying power to device(s) coupled to the power supply, such as an amplifier), resistive, capacitive and inductive components in the main power path (from the mains electric power to the device(s) or amplifier) are eliminated. This ensures a clean and direct power delivery which can ensure the best sound performance when the power supply 100 provides power to a class A/B/G amplifier. Advantageously, any noise from the first PSU 104 that could interfere with audio performance provided by the power supply 100 is eliminated.

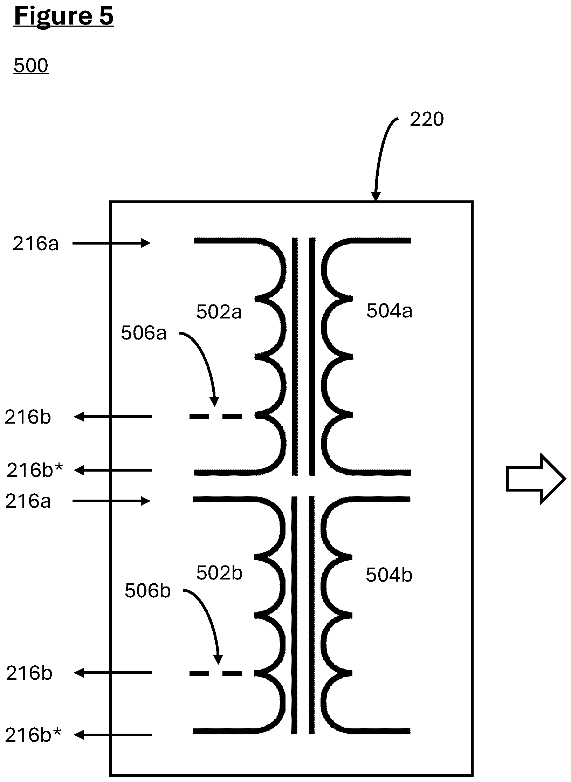

Figure 2 depicts a power supply 200 which corresponds to power supply 100 as described with reference to figure 1 and shows additional features corresponding to embodiments of the invention. Power supply 200 includes a first PSU 210 that corresponds substantially to the first PSU 104 of figure 1, a second PSU 220 that corresponds substantially to the second PSU 106 of figure 1, and computing means 212 that corresponds substantially to the computing means 108 of figure 1. The first PSU 210 may be a low-power PSU as described above. The second PSU 220 may be a transformer as described above and also below with reference to figure 5. Power supply 200 includes a plurality of switching means as described in figure 1. The plurality of switching means may include first switching means 204, 206 which correspond to first switching means 112a of figure 1, second switching means 202 which correspond to second switching means 112b of figure 1, and third switching means 208. The first switching means may include a main start switch 204 and a soft start switch 206 as described below in more detail.

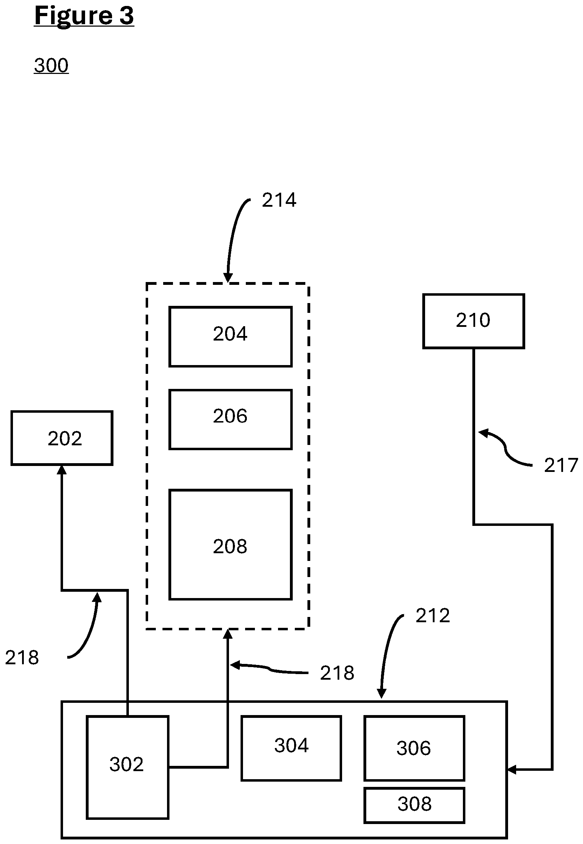

Figure 2 depicts solid arrow lines 216a indicating a mains electric power input (for example, the live wire(s)) into the power supply 200, the mains electric power passing through the first switching means 204, 206 and the second switching means 202, the mains electric power powering the first PSU 210 and the mains electric power powering the second PSU 220. Figure 2 depicts solid arrow lines 216b indicating the return mains electric power (for example, the neutral wire(s)) from the second PSU 220, the return mains electric power passing through the third switching means 208, and the return mains electric power passing through the second switching means 202. The solid arrow lines 216a and 216b correspond to electrical connections between the components of the power supply 200 (for example, wires, cables or any other suitable electrical connector). Figure 2 depicts a dashed line 217 indicating an electrical connection 217 from the first PSU 210 to the computing means 212. The computing means 212 is powered by the first PSU 210 as described above with reference to figure 1. Figure 2 depicts dashed lines 218 to depict one or more electrical connections 218 from the computing means 212 to the first switching means 204, 206 (for example, to each of the main start switch 204 and to the soft start switch 206), the second switching means 202 and to the third switching means 208. The electrical connections 218 and the computing means 212 are described in more detail below with reference to figure 3. In an embodiment, the power supply 100 is rated to receive a power input from 90 volts to 270 volts AC input at either 50Hz or 60Hz.

In an embodiment, the first switching means and the third switching means may be in a single enclosure 214. In an embodiment, the second switching means may also be in the single enclosure 214. Advantageously, space savings can be achieved in the power apparatus and simple replaceability of switching means can be facilitated.

The first switching means 204, 206 includes a main start switch 204 which on an input side receives the mains electric power and on an output side can switch between providing the mains electric power to the first PSU 210 or the second PSU 220. Accordingly, the main start switch 204 is operable to divert the mains electric power to either the first PSU 210 or the second PSU 220. During the standby mode, the main start switch 204 is in a default position to provide the mains electric power to the first PSU 210. The first switching means 204, 206 includes a soft start switch 206 which is coupled in parallel to the main start switch 204. The soft start switch 206 is an on/off switch that receives the mains electric power on an input side and on an output side the soft start switch 206 has one output to the second PSU 220. Accordingly, the soft start switch 206 is operable to provide the mains electric power to the second PSU 220 when the soft start switch 206 is engaged (or in an "on" position). In the standby mode, the soft start switch 206 defaulted to disengaged position (or in an "off' position) in which no mains electric power is provided to the second PSU 220. In an embodiment, the soft start switch 206 may include an in-rush limiter, arc suppression, and/or any other suitable features to protect the soft start switch 206 and prolong its life. In an embodiment, the first PSU 210 and/or the computing means 212 may provide power to additional components of the power supply 200. This may include other ancillary features, such as a connection to a wireless network for the sending and receiving of data.

The power supply 200 may operate in a standby mode, an "on" mode, or transition between the standby mode and the "on" mode as described above. In the standby mode or in a first state of the transition mode, mains electric power 216a passes through the second switching means 202 without operating any switches therein, passes through the mains start switch 204, and powers the first PSU 210. The first PSU 210 will provide power (for example, a DC voltage at up to 5 volts and 1 amp making up 5 watts) to the computing means 212 via electrical connection 217. Once the computing means 212 has booted up, the processor of the computing means 212 measures the mains electric power and determines whether the mains electric power is in a first (i.e. low) voltage range or in a second (i.e. high) voltage range as described above with reference to figure 1. Subsequent to this, the processor of the computing means 212 sends a signal via electrical connection 218 to the second switching means 202 and operates the second switching means 202 to the low voltage setting or the high voltage setting of the second PSU 220 as described above.

During the transition mode and after the low voltage setting or the high voltage setting of the second PSU 220 have been selected, the processor of the computing means 212 may send a signal via an electrical connection 218 to the soft start switch 206 to engage the soft start switch 206 (switching it "on"), thereby providing mains electric power to the second PSU 220 via the soft start switch 206 while mains electric power is also provided to the first PSU 210 via the main start switch 204. Subsequently to operating the soft start switch 206, the processor of the computing means 212 may send a signal via the electrical connection 218 to the main start switch 204 to operate the main start switch 204 from the first PSU 210 to the second PSU 220. Finally, the processor of the computing means 212 may send a signal via the electrical connections 218 to the soft start switch 206 to disengage, thereby providing the mains electric power to the second PSU 220 only via the main start switch 204. Accordingly, a smooth and non-disruptive switching operation between the first PSU 210 and the second PSU 220 may take place. Advantageously, a smooth transition of power can be provided between the ancillary power supply unit 210 and the main power supply unit 220. This allows for the computing means 212 of the ancillary supply unit 210 to switch off without errors and also ensures that the main power supply unit 220 is switched on properly before the main switch 204 between the ancillary power supply unit 210 and the main power supply 220 unit is operated.

In an embodiment, while main start switch 204 is switched to the first PSU 210 and while the soft start switch 206 is engaged and providing mains electric power to the second PSU 220, the processor may be further operable to measure the voltage of an output power of the second PSU 220. This may be done, for example, by a voltage measurement device operable to measure a voltage on the second rail of the second PSU 220 and by sending the voltage measurements via electrical connections (not shown) from the second PSU 220 to the computing means 212. The processor of the computing means 212 may monitor the voltage of the second rail as it the second PSU 220 powers up and energises. The processor of the computing means 212 may operate the main start switch 204 from the first PSU 210 to the second PSU if the measured voltage is within a predetermined threshold range. The predetermined threshold range may include a lower voltage value and a higher voltage value at which the device(s) (and/or amplifier) are rated to run. For example, if the device(s) (or amplifier) are rated to run at 25 volt, the predetermined threshold range may be from 24.5 volt to 25.5 volt, from 24 volt to 25 volt, from 20 volt to 30 volt, or similar. If the measured voltage is outside of the predetermined threshold range (for example, if the measured voltage is above the threshold range for any period of time or if the measured voltage stays below the threshold range for a predetermined time) then it may be determined by the computing means 212 that a component within the power supply 200 is faulty. To prevent any damage, the processor of the computing means 212 then sends a signal via an electrical connection 218 to the soft start switch 206 to disengage the soft start switch (i.e. to switch it "off") and thereby switch off the second PSU 220. The processor of the computing means 212 maintains the main start switch 204 switched to the first PSU 210 and thus in the default position where mains electric power is provided to the first PSU 210.

Advantageously, the computing means 212 can monitor the power of the main power supply unit 220 to ensure that the voltage on the output side of the main power supply unit 220 starts to come up and that it reaches the expected voltage. If this does not happen, it is likely that there is a fault in the system which could damage components of the power supply 200 or of a device coupled to the output of the main power supply unit 220. This damage is prevented by monitoring the power on the output side of the main power supply unit 220 and by disengaging the main power supply unit 220 if the measured voltage is above or below a predetermined range. In this situation, a fault report may be recorded by the computing means 212.

In an embodiment, the first PSU 210 may provide power to further components in addition to the computing means 212. The further components may include components operable to maintain the standby mode. This may, for example, include sensor components and/or switches operable to wait for a signal to switch the power supply 200 from the standby mode to the "on" mode.

In an embodiment, the second PSU 220 may include a separate winding on an output side (for example, a separate winding of the secondary windings of the second PSU 106, 220 as described above and below). The separate winding on the output side of the second PSU 220 may be electrically connected (for example, via a wire, cable or any other suitable connection to provide electric power) to the computing means 212. Accordingly, the computing means 212 may remain switched on during the standby mode of the power supply 200, during an "on" mode of the power supply 200, and during a transition mode from the standby mode to the "on" mode of the power supply 200. Advantageously, the computing means 212 can be multipurpose computing means for both managing the transition between an "on" mode of the power supply 200 and a standby mode of the power supply 200. Furthermore, the further components powered by the first PSU 210 are not powered by the separate winding on the output side of the second PSU 220. Accordingly, efficiency and power savings of the power supply 200 are improved compared to ordinary power supplies/transformers in which all ancillary components (including, for example, any components required to maintain a standby mode of a device and to help transition from the standby mode to an "on" mode) are powered even when the ordinary power supply/transformer is no longer in the standby mode.

In an embodiment, the power supply 200 may receive a command (for example, a signal received from a network or a separate device, or user pressing a physical button on the power supply 200) to switch (or transition) the power supply 200 from an "on" mode to the low-power or standby mode. The processor of the computing means 212 may send a signal to the soft start switch 206 to re-engage (switch "on") the soft start switch 206 thereby providing mains electric power to the second PSU 220 via the main start switch 204 and the soft start switch 206. The processor of the computing means 212 may subsequently send a signal to the main start switch 204 to switch the main start switch 204 to operate the main start switch 204 from the second PSU 220 to the first PSU 210 to switch on the first PSU 210 wile the second PSU 220 is switched on. The processor of the computing means 212 may subsequently disengage the soft start switch 206 to switch off the second PSU 220 while the first PSU 210 is powered and switched on via the main start switch 204, thus placing the power supply 200 in the low-power standby mode.

Advantageously, seamless transition between the operation of the main power supply unit 220 and the ancillary power supply unit 210 can be provided and the power supply 200 can be placed in a more efficient low-power standby mode in which only the ancillary power 210 unit is powered and no power is provided to the main power supply unit 220.

In an embodiment, during the low-power standby mode, the processor of the computing means 212 may further continuously monitor the voltage of the mains electric power input to the first PSU 210 and operate the second switching means 202 to the low voltage setting if the mains electric power is in the low voltage range or to the high voltage setting if the mains electric power is in the high voltage range as described above. Advantageously, the power supply 200 can be switched into a low-power standby mode that is more efficient because only the first PSU 210 (a lower power supply unit) needs to be powered, rather than the higher powered second PSU (which may be a toroidal transformer that pulls a relatively large amount of power when in standby mode). This provides a power supply 200 that meets the more stringent requirements of the European Union's Energy-Related Products (ErP) Directive.

In an embodiment, the second PSU 220 may be a step-up transformer or it may be a step-down transformer. The second PSU 220 may include a plurality of primary windings (a primary rail) operable to receive the mains electric power (for example, in the low voltage range or the high voltage range as described above) and a plurality of secondary windings (a secondary rail) operable to provide an output power to the device(s) (or amplifier) as described above. The low voltage setting of the second PSU 220 may include tapping a first number of windings on the primary side of the second PSU 220 (at a low voltage tap) and the high voltage setting of the second PSU 220 may include tapping twice the number of windings on the primary side of the second PSU 220 (at a high voltage tap) compared to the low voltage setting.

The power supply 200 may, in addition to determining that the voltage of the mains electric power is in the low voltage range or the high voltage range, also determine from the voltage measurement that the mains electric power is high or low compared to a regulated voltage. This is particularly useful in Class A power amplifier products where amplifier efficiency affects the heat dissipated into the product heatsink/casework. A high incoming mains electric power (for example, 250 volt incoming in a regulated 230 volt region) can mean excessive heat which can cause injury to a user, damage to components of the power supply 200, and results in failing safety margins. Similarly, a low incoming mains electric power (for example, 200 volt incoming in a regulated 230 volt region) can cause damage to the power supply 200 and inefficiency of the power supply 200 due to reduced power being provided to the amplifier. This is because the voltage on primary windings and the voltage on the secondary windings are proportional to each other. Accordingly, if the voltage on the primary winding increases or decreases by 10%, this can lead to a respective increase or decrease of the voltage on the secondary windings by 10%. Any device(s) powered by the second PSU 220 that are rated at a specific voltage and are coupled to the secondary windings of the second PSU 220 may not function properly at a voltage that is 10% above or below the expected output voltage of the second PSU 220. This is solved by providing the second PSU 220 with a plurality of additional taps on the primary windings in addition to the low voltage setting tap and the high voltage setting tap as described above. The plurality of additional taps may be selected by the third switching means 208 which are operated by a signal received from the processor of the computing means 212 via an electrical connection 218. The third switching means 208 may be operated during the standby mode of the power supply 200 or during the first state of the transition mode of the power supply 200 and after the low voltage setting or the high voltage setting of the second PSU 220 has been selected by the second switching means 202.

The third switching means 208 is connected on an input side to a plurality of electrical connections 216b corresponding to a plurality of return mains electric power connections (neutral wire(s)) 216b from the primary windings of the second PSU 220. One of the plurality of return mains electric power connections 216b may correspond to the low voltage tap of the second PSU 220, the tap corresponding to the low voltage setting. Another one of the plurality of return mains electric power connections 216b may correspond to the high voltage tap of the second PSU 220, the tap corresponding to the high voltage setting. The second PSU 220 may comprise at least one additional tap with a corresponding returns main electric power connection 216b feeding into the input side of the third switching means 208. The at least one additional tap may tap a predetermined amount of additional windings on the primary side of the second PSU 220 to the high voltage tap. The at least one additional tap may tap a predetermined amount of additional windings on the primary side of the second PSU 220 to the low voltage tap. The at least one additional tap may tap a predetermined amount less windings on the primary side of the second PSU 220 to the high voltage tap. The at least one additional tap may tap a predetermined amount less windings on the primary side of the second PSU 220 to the low voltage tap. The output side of the switching means feeds the return mains electric power (live wire(s)) back into the power input 102 to complete the circuit. Although only two taps are shown in figure 2, any number of taps can be placed on the primary windings of the second PSU 220.

The third switching means 208 are operable to select one of the plurality of taps or one of the plurality of additional taps on the primary windings of the second PSU such that the voltage of the output power on the second windings is constant. Subsequent to determining that the measured voltage is in the low voltage range or the high voltage range, the processor of the computing means 212 may be operable to determine whether the measured voltage in the low voltage range is above a first threshold voltage or whether the voltage in the high voltage range is above a second threshold voltage. Alternatively, the processor of the computing means 212 may be operable to determine whether the measured voltage in the low voltage range is below a third threshold voltage or whether the voltage in the high voltage range is below a fourth threshold voltage. The processor of the computing means 212 may be operable to operate the third switching means when the voltage in the low voltage range is above the first threshold voltage, the voltage in the high voltage range is above the second threshold voltage, the voltage in the low voltage range is below the third threshold voltage, or the voltage in the high voltage range is below the fourth threshold voltage.

Advantageously, the power supply 200 can determine when mains electric power is relatively high or low and can switch to a different tap on the primary windings of the second PSU 220 to compensate for the increase or decrease in voltage of the mains electric power and bring the voltage on the secondary windings (the secondary rail) of the second PSU 220 back into the safe operating area of the power supply 200.

This is advantageous during unpredictable spikes of voltage in mains electric power. A regulated voltage may, for example, be 230 Volt. However, the mains voltage received at the power supply unit could be well above or below this value (for example, it may be 200 Volt or 260 Volt). When the main power supply unit is a transformer and the output voltage is expected to power a device at a specific voltage, a voltage that is well above or below the expected 230 Volt range causes the output voltage to be well above or well below the voltage required to power the device. This can cause the device to be damaged. By selecting a tap on the primary windings of the transformer when the measured voltage (in the higher voltage range or the lower voltage range) is above or below a threshold voltage, the output voltage can be maintained at constant rate. For example, when the voltage of the mains electric power is 10% above the expected regulated voltage, the processor can operate the third switching means to select a tap on the primary windings of the transformer that has 10% more windings. With the use of Faraday's law, the output voltage is thus maintained. Furthermore, this process happens automatically and dynamically by measuring the voltage with the processor of the computing means and by operating the third switching means with the processor of the computing means according to the measured voltage. This reduces human error and ensures that the device powered by the transformer is not damaged due to voltage fluctuation and can run efficiently.

In an embodiment, the third switching means 208 includes a first switch operable to select the low voltage tap when the voltage in the low voltage range is at a predetermined low voltage or to select a first tap with more windings than the low voltage tap when the voltage in the low voltage range is above the first threshold voltage. Alternatively or additionally, the third switching means includes a second switch operable to select the high voltage tap when voltage in the high voltage range is at a predetermined high voltage or to select a second tap with more windings than the high voltage tap when the voltage in the high voltage range is above the second threshold voltage. Alternatively or additionally, the third switching means includes a third switch operable to select the low voltage tap when then voltage in the low voltage range is at the predetermined low voltage or to select a third tap with less windings than the low voltage tap when the voltage in the low voltage range is below the third threshold voltage. Alternatively or additionally, the third switching means includes a fourth switch operable to select the high voltage tap when then voltage in the high voltage range is at the predetermined high voltage or to select a fourth tap with less windings than the high voltage tap when the voltage in the high voltage range is below the fourth threshold voltage.

Advantageously by providing multiple different types of switches operated by the processor of the computing means 212, damage to the device(s) powered by the power supply 200 can be prevented irrespective of whether the power supply 200 is operating with voltage fluctuations in the lower voltage range or voltage fluctuations in the higher voltage range. Furthermore, the power supply 200 can adapt the output voltage of the second PSU 220 for multiple different type of voltage fluctuations, such as the voltage being higher than the expected voltage (for example, 125 Volt in a 115 Volt region or 260 Volt in a 230 Volt region) or the voltage being lower than the expected voltage (for example, 90 Volt in a 115 Volt region or 200 Volt in a 230 Volt region). This is particularly useful in Class A Power Amplifier products where amplifier efficiency affects the heat dissipated into the product heatsink/casework. High incoming mains voltage can mean excessive heat results in failing safety margins due to legal limits that govern the maximum temperature a touchable surface can reach. There is also a maximum safe operating temperature of the power transistors of amplifiers that cannot be exceeded. By having an additional tap on the primary windings this can be switched in to lower the output voltage into safe operating margins, without having to compromise the specified power output of the amplifier under normal operating conditions.

In an embodiment, the first threshold voltage is may be 1%, 5%, 10%, or 15% or any other percentage value above the predetermined low voltage and the first tap has respectively 1%, 5%, 10%, or 15% more windings than the low voltage tap. The second threshold voltage may be 1%, 5%, 10%, or 15% above the predetermined high voltage and the second tap has respectively 1%, 5%, 10%, or 15% more windings than the high voltage tap. The third threshold voltage may be 1%, 5%, 10%, or 15% below the predetermined low voltage and the third tap has respectively 1%, 5%, 10%, or 15% less windings than the low voltage tap. The fourth threshold voltage may be 1%, 5%, 10%, or 15% below the predetermined high voltage and the fourth tap has respectively 1%, 5%, 10%, or 15% less windings than the high voltage tap.

In an embodiment, the predefined low voltage is from 90 Volt to 140 Volt and wherein the predefined high voltage is from 190 Volt to 270 Volt. In an embodiment, the predefined low voltage may be from 80 Volt to 150 Volt, from 80 Volt to 160 Volt, or from 80 Volt to 170 Volt. In an embodiment, the predefined high voltage may be from 190 Volt to 300 Volt, from 190 Volt to 310 Volt, from 170 Volt to 300 Volt, from 170 Volt to 310 Volt, from 160 Volt to 300 Volt, from 160 Volt to 310 Volt, from 150 Volt to 300 Volt, or from 150 Volt to 310 Volt. Advantageously, the power supply can operate in the majority of countries in the world. The predefined low voltage may be a defined voltage, such as 115 Volt or 120 Volt depending on the regulated voltage of a region. The predefined high voltage may be a defined voltage, such as 220 volt, 230 volt or 240 volt depending on the regulated voltage of a region.

Figure 3 shows a detailed diagram 300 of the computing means 212 of the power supply 200 as described with reference to figures 1 and 2. Computing means 212 may include a processor 302 electrically coupled via electrical connections 218 to each of the main start switch 204, the soft start switch 206, the second switching means 202, and each of the switches in the third switching means 208. The processor may be operable to receive and send information to various components of the power supply 200 as described above, and to each of the components of the computing means 212. Computing means 212 may include a mains measurement comparator 304 electrically coupled to the first PSU 210 and operable to receive the voltage of the mains electric power. The mains measurement comparator 304 may be a standard voltage meter including circuitry, such as an analog to digital (ADC) converter, to accurately measure the incoming AC voltage from the mains electric power. The power supply 200 may have a second standby mode in which the mains measurement comparator 304 is switched off to further increase efficiency and reduce power drawn until the request is received to switch the power supply 200 to the "on" mode. The computing means 212 may include a switch control 308 operable to send one or more signals to the processor 302 to operate the one or more switching means and/or switches 202, 204, 206, 208 of the power supply 200. The computing means 212 may include an opto isolator 306 operable to transfer electrical signals between the first PSU 210, the computing means 212, and any device(s) coupled to the power supply 200. The opto isolator 306 prevents high voltages from affecting the system receiving signal and accordingly reduces noise and interference between components in the power supply 200. Advantageously, safety legislation is met by isolating higher mains voltage from the lower voltage computing means 212 and a user is protected from dangerous high voltage.

Figure 4 shows a detailed diagram 400 of the switching means of the power supply 200 as described above. Power supply 200 may include a first main switch 204a and a second main switch 204b. The first main switch 204a may be operable to divert the mains electric power to the first PSU 210 or to the second PSU 220 when the second switching means 202 is in the high voltage setting. The first main switch 204a is electrically coupled to the high voltage tap of the second PSU 220. The second main switch 204b may be operable to divert the mains electric power to the first PSU 210 or to the second PSU 220 when the second switching means 202 is in the low voltage setting. The second main switch 204b is electrically coupled to the low voltage tap of the second PSU 220. The soft start switch 206 may include two switches. The first switch of the soft start switch 205 is an "on", "off' switch when the second switching means 202 is in the high voltage setting. In the first switch, the soft start switch 206 has an input from the main electric power that is in parallel to the main electric power input of the first main switch 204a and an output to the high voltage tap. The first switch of the soft start switch 205 is an "on", "off' switch when the second switching means 202 is in the low voltage setting of the second PSU 220. In the second switch, the soft start switch 206 has an input from the main electric power that is in parallel to the main electric power input of the second main switch 204b and an output to the low voltage tap of the second PSU 220. The third switching means 208 may include switches for tapping primary windings of the second PSU 220 when operating in the high voltage mode, such as switch 208b, and switches for tapping primary windings of the second PSU 220 when operating in the low voltage mode, such as switch 208a.

In an embodiment, the first switching means including the (first and/or second) main switch 204, 204a, 204b and the second soft start switch 206 may each be relays, transistors or any other type of electrically operated switch. In an embodiment, each of the third switching means 208 may be a relay, a transistors or any other type of electrically operated switch. In an embodiment, the switching means and switches described above may be bi-stable latching relays that draw zero power when in any engaged or disengaged state. The computing means 212 may control any of the relays via a bi-stable relay drive circuit, such as relay control 308 described above with reference to figure 3.

Figure 5 shows a detailed diagram 500 of the second PSU 220. The second PSU 220 may be a transformer, such as a step-up or step-down transformer, as described above. In an embodiment, the second PSU 220 may be a toroidal transformer. The transformer 220 may include a plurality of first windings 502 separated into a first group of first windings 502a and a second group of first windings 502b. The number of windings in the first group of first windings 502a and the second group of first windings 502b may be identical, such that one of the first group 502a or the second group of first windings 502b may be tapped when the transformer 220 is operating in the low voltage setting. An example tapping in the low voltage setting could include input mains electric power (live wire(s)) 216a at 502a and a return mains electric power (neutral wire(s)) 216b at 502a. Both the first group 502a and the second group of first windings 502b may be tapped when the transformer 220 is in the high voltage setting. An example tapping in the high voltage setting could include input mains electric power (live wire(s)) 216a at 502a and return mains electric power (neutral wire(s)) 216b at 502b.

The transformer may include a plurality of second windings 504 separated into a first group of second windings 504a and a second group of second windings 504b. The number of windings in the first group of second windings 504a and the second group of second windings 504b may be identical, such that one of the first group 504a or the second group of second windings 504b are used when the transformer 220 is operating in the low voltage setting.

Figure 5 illustrates example taps 216b* of the first group 502a and the second group of first windings 502b. The example taps 216b* have more windings than the taps at 216, thus corresponding to taps when the measured voltage is determined to be higher than the predetermined voltage as defined above. Figure 5 only demonstrates two example taps 216b*, however the invention is not limited to these two taps and may include any number of taps as described above.

The relationship between the number of windings on the primary side of the second PSU 220, the voltage on the primary side of the second PSU 220, the number of windings on the secondary side of the second PSU 220 and the voltage on the secondary side of the second PSU 220 can be defined using the equation *Vs*/*Vp = Ns*/*Np* where *Vs* is the voltage on the secondary side, *Vp* is the voltage on the primary side, *Ns* is the number of windings on the secondary side, and *Np* is the number of windings on the primary side.

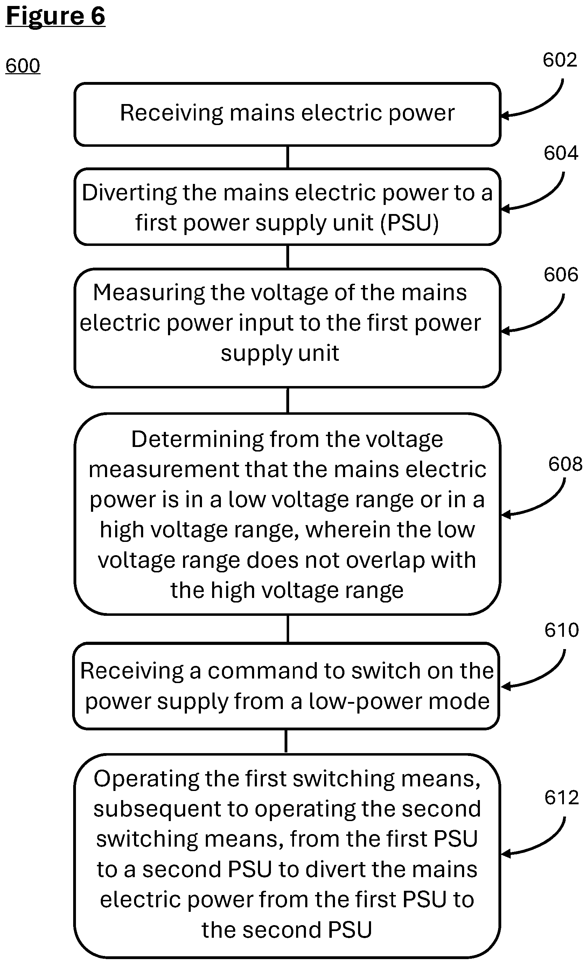

Figure 6 depicts a flow chart of a method 600 of operating a power supply, such as power supply 100 and 200 as described above with reference to figures 1 to 5. The method of operating the power supply 100, 200 includes receiving, from the power input, the mains electric power as at point 602. At point 604 the method includes diverting the mains electric power, by the first switching means 112a, 204, 206 to the first PSU 104, 210. At point 606 the method includes measuring, by processor of computing means 108, 212, the voltage of the mains electric power input to the first PSU 104, 210. At point 608 the method includes determining from the voltage measurement, by the processor of the computing means 108, 212, that the mains electric power is in a low voltage range or in a high voltage range, wherein the low voltage range does not overlap with the high voltage range. At point 610 the method includes receiving a command to switch on the power supply 100, 200 from a low-power mode (this may, for example, include transitioning the power supply 100, 200 from the standby mode to the "on" mode as described above). At point 612 the method includes operating, by the processor of the computing means 108, 212, the second switching means 112b, 202 to the low voltage setting if the mains electric power is in the low voltage range or to the high voltage setting if the mains electric power is in the high voltage range. The method includes receiving a command to switch on the power supply from a low-power mode. The method includes operating, by the processor, the first switching means, subsequent to operating the second switching means, from the first PSU to the second PSU to divert the mains electric power from the first PSU to the second PSU.

In an embodiment, the first switching means includes a main start switch 204 operable to divert the mains electric power to the first PSU 210 or to the second PSU 220, and a soft start switch 206 coupled in parallel to the main start switch 204, the soft start switch 206 operable to provide the mains electric power to the second PSU 220 when the soft start switch is engaged. Operating the first switching means further includes switching on, by the processor of the computing means 212, the second PSU 220 while keeping the first PSU 210 switched on by engaging the soft start switch. Operating the first switching means further includes subsequently operating, by the processor of the computing means, the main start switch 204 from the first PSU 210 to the second PSU 220. Operating the first switching means further includes subsequently disengaging, by the processor of the computing means 212, the soft start switch 206.

In an embodiment, the method further includes measuring, by the processor of the computing means 212, the voltage of an output power of the second PSU when the soft start switch is engaged and when the main switch is switched to the first PSU. The method further includes operating, by the processor, the main start switch from the first PSU to the second PSU if the measured voltage is within a predetermined threshold range. The method further includes disengaging, by the processor by the processor of the computing means 212 the soft start switch and maintain the main start switch in a position where mains electric power is provided to the first PSU if the measured voltage is above or below the predetermined range.

In an embodiment, the second PSU 220 is a transformer including a plurality of primary windings operable to receive the mains electric power in the low voltage range or the high voltage range and a plurality of secondary windings operable to provide an output power, and the power supply further includes a third switching means electrically coupled to the second PSU and to the computing means, the third switching means 208 operable to select one of a plurality of taps on the primary windings of the second PSU such that the voltage of the output power on the second windings is constant. The method further includes determining, by the processor by the processor of the computing means 212, whether voltage in the low voltage range is above a first threshold voltage or whether the voltage in the high voltage range is above a second threshold voltage. Alternatively, the method further includes determining, by the processor, whether the voltage in the low voltage range is below a third threshold voltage or whether the voltage in the high voltage range is below a fourth threshold voltage. The method further includes operating, by the processor, the third switching means when the voltage in the low voltage range is above the first threshold voltage, the voltage in the high voltage range is above the second threshold voltage, the voltage in the low voltage range is below the third threshold voltage, or the voltage in the high voltage range is below the fourth threshold voltage.

In an embodiment, the method further includes selecting a low voltage tap of a first switch of the third switching means when the voltage in the low voltage range is at a predetermined low voltage or selecting a first tap of the first switch with more windings than the low voltage tap when the voltage in the low voltage range is above the first threshold voltage. Alternatively or additionally, the method further includes selecting a high voltage tap of a second switch of the third switching means when the voltage in the high voltage range is at a predetermined high voltage or selecting a second tap of the second switch with more windings than the high voltage tap when the voltage in the high voltage range is above the second threshold voltage. Alternatively or additionally, the method further includes selecting a low voltage tap of a third switch of the third switching means when voltage in the low voltage range is at the predetermined low voltage or selecting a third tap of the third switch with less windings than the low voltage tap when the voltage in the low voltage range is below the third threshold voltage. Alternatively or additionally, the method further includes selecting a high voltage tap of a fourth switch of the third switching means when the voltage in the high voltage range is at the predetermined high voltage or selecting a fourth tap of the fourth switch with less windings than the high voltage tap when the voltage in the high voltage range is below the fourth threshold voltage.

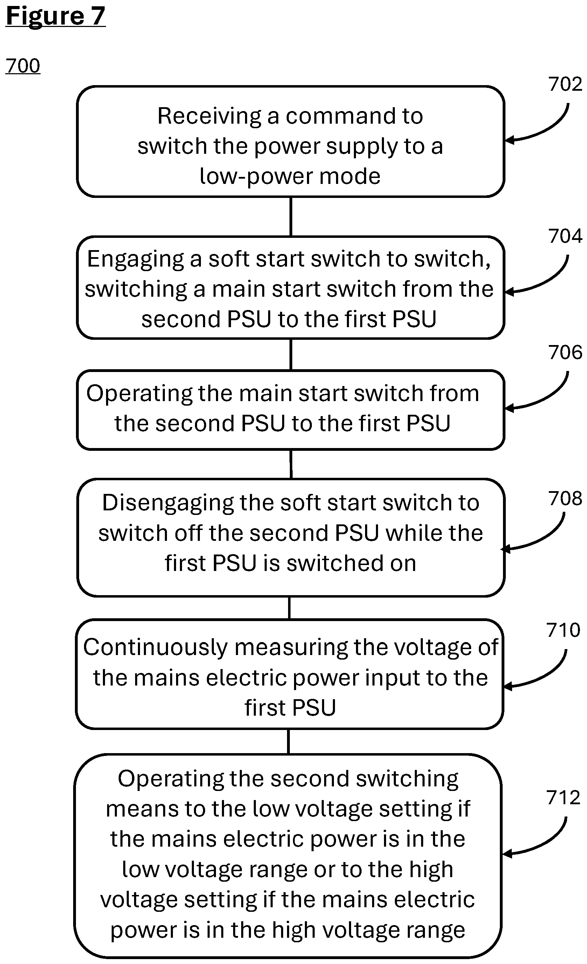

Figure 7 depicts a flow chart of further methods 700 of operating a power supply, such as power supply 100 and 200 as described above with reference to figures 1 to 6.

In an embodiment, the method includes receiving a command to switch the power supply to a low-power mode at step 702 and engaging, by the processor of the computing means 212, the soft start switch 206 at step 704. At step 706 the method further includes subsequently operating, by the processor, the main start switch from the second PSU to the first PSU to switch on the first PSU while the second PSU is switched on. At step 708 the method further includes subsequently disengaging the soft start switch to switch off the second PSU while the first PSU is switched on. Advantageously, seamless transition between the operation of the main power supply unit and the ancillary power supply unit can be provided and the power supply can be placed in a more efficient low-power standby mode in which only the ancillary power unit is powered and no power is provided to the main power supply unit.

At step 710 the method further includes continuously measuring, by the processor, the voltage of the mains electric power input to the first PSU. In an embodiment, the processor stops measurement of the mains measuring when the power supply 100, 200 is in an "on" mode. Advantageously, measurement of the voltage of the mains electric power only occurs during the transition from the low power standby mode to the "on" mode which ensures no power is drawn from the first PSU during the standby mode. At step 712 the method further includes operating, by the processor, the second switching means to the low voltage setting if the mains electric power is in the low voltage range or to the high voltage setting if the mains electric power is in the high voltage range. Advantageously, the power supply can be switched into a low-power standby mode that is more efficient because only the first PSU (a lower power supply unit) needs to be powered, rather than the higher powered second PSU (which may be a toroidal transformer that pulls a relatively large amount of power when in standby mode). This provides a power supply that meets the more stringent requirements of the European Union's Energy-Related Products (ErP) Directive.

## Claims

1. A power supply (100) comprising:
a power input (102) operable to receive a mains electric power;
computing means (108) comprising a processor;
a first power supply unit, PSU, (104) electrically coupled to the computing means, the first PSU operable to receive the mains electric power when the power supply is switched on and to provide power to the computing means;
a second PSU (106);
a first switching means (112a) electrically coupled to the power input, to the first PSU and to the second PSU, the first switching means operable to divert the mains electric power to the first PSU or to the second PSU;
a second switching means (112b) operable to select a high voltage setting or a low voltage setting of the second PSU;
wherein the computing means are further electrically coupled to the first switching means and to the second switching means, and the processor is operable to:
measure the voltage of the mains electric power input to the first PSU,
determine from the voltage measurement that the mains electric power is in a low voltage range or in a high voltage, wherein the low voltage range does not overlap with the high voltage range;
operate the second switching means to the low voltage setting if the mains electric power is in the low voltage range or to the high voltage setting if the mains electric power is in the high voltage range, and
operate the first switching means, subsequent to operating the second switching means, from the first PSU to the second PSU to divert the mains electric power from the first PSU to the second PSU.

2. The power supply of claim 1, wherein the first switching means comprises:
a main start switch (204) operable to divert the mains electric power to the first PSU or to the second PSU;
a soft start switch (206) coupled in parallel to the main start switch, the soft start switch operable to provide the mains electric power to the second PSU when the soft start switch is engaged; and
wherein operating the first switching means further comprises the processor to:
switch on the second PSU while keeping the first PSU switched on by engaging the soft start switch,
subsequently operate the main start switch from the first PSU to the second PSU, and
subsequently disengage the soft start switch.

3. The power supply of claim 2, wherein the processor is further operable to:
measure the voltage of an output power of the second PSU when the soft start switch is engaged and when the main switch is switched to the first PSU;
operate the main start switch from the first PSU to the second PSU if the measured voltage is within a predetermined threshold range; and
disengage the soft start switch and maintain the main start switch in a position where mains electric power is provided to the first PSU if the measured voltage is above or below the predetermined range.

4. The power supply of claims 1 to 3, wherein the second PSU is a transformer comprising a plurality of primary windings operable to receive the mains electric power in the low voltage range or the high voltage range and a plurality of secondary windings operable to provide an output power, and the power supply further comprises:
a third switching means (208) electrically coupled to the second PSU and to the computing means, the third switching means operable to select one of a plurality of taps on the primary windings of the second PSU such that the voltage of the output power on the second windings is constant; and
the processor is further operable to:
determine whether the voltage in the low voltage range is above a first threshold voltage or whether the voltage in the high voltage range is above a second threshold voltage, or determine whether the voltage in the low voltage range is below a third threshold voltage or whether the voltage in the high voltage range is below a fourth threshold voltage, and
operate the third switching means when:
the voltage in the low voltage range is above the first threshold voltage,
the voltage in the high voltage range is above the second threshold voltage,
the voltage in the low voltage range is below the third threshold voltage, or
the voltage in the high voltage range is below the fourth threshold voltage.

5. The power supply of claim 4, wherein the third switching means comprises:
a first switch operable to select a low voltage tap when the voltage in the low voltage range is at a predetermined low voltage or to select a first tap with more windings than the low voltage tap when the voltage in the low voltage range is above the first threshold voltage;
a second switch operable to select a high voltage tap when voltage in the high voltage range is at a predetermined high voltage or to select a second tap with more windings than the high voltage tap when the voltage in the high voltage range is above the second threshold voltage;
a third switch operable to select the low voltage tap when then voltage in the low voltage range is at the predetermined low voltage or to select a third tap with less windings than the low voltage tap when the voltage in the low voltage range is below the third threshold voltage; and/or
a fourth switch operable to select the high voltage tap when then voltage in the high voltage range is at the predetermined high voltage or to select a fourth tap with less windings than the high voltage tap when the voltage in the high voltage range is below the fourth threshold voltage.

6. The power supply of claim 5, wherein:
the first threshold voltage is 10% above the predetermined low voltage and the first tap has 10% more windings than the low voltage tap;
the second threshold voltage is 10% above the predetermined high voltage and the second tap has 10% more windings than the high voltage tap;
the third threshold voltage is 10% below the predetermined low voltage and the third tap has 10% less windings than the low voltage tap; and/or
the fourth threshold voltage is 10% below the predetermined high voltage and the fourth tap has 10% less windings than the high voltage tap.

7. The power supply of claims 1 to 6, wherein the predefined low voltage is from 90 Volt to 140 Volt and wherein the predefined high voltage is from 190 Volt to 270 Volt.

8. An amplifier comprising the power supply of any one of claims 1 to 7.

9. A method of operating a power supply as set out in claim 1, the method comprising:
receiving, from the power input, the mains electric power;
diverting the mains electric power, by the first switching means, to the first PSU;
measuring, by processor, the voltage of the mains electric power input to the first PSU;
determining from the voltage measurement, by the processor, that the mains electric power is in a low voltage range or in a high voltage range, wherein the low voltage range does not overlap with the high voltage range;
operating, by the processor, the second switching means to the low voltage setting if the mains electric power is in the low voltage range or to the high voltage setting if the mains electric power is in the high voltage range;
receiving a command to switch on the power supply from a low-power mode; and
operating, by the processor, the first switching means, subsequent to operating the second switching means, from the first PSU to the second PSU to divert the mains electric power from the first PSU to the second PSU.

10. The method of claim 9, wherein the first switching means comprises a main start switch operable to divert the mains electric power to the first PSU or to the second PSU, and a soft start switch coupled in parallel to the main start switch, the soft start switch operable to provide the mains electric power to the second PSU when the soft start switch is engaged, and wherein operating the first switching means further comprises:
switching on, by the processor, the second PSU while keeping the first PSU switched on by engaging the soft start switch;
subsequently operating, by the processor, the main start switch from the first PSU to the second PSU; and
subsequently disengaging, by the processor, the soft start switch.

11. The method of claim 10, further comprising:
measuring, by the processor, the voltage of an output power of the second PSU when the soft start switch is engaged and when the main switch is switched to the first PSU;
operating, by the processor, the main start switch from the first PSU to the second PSU if the measured voltage is within a predetermined threshold range; and
disengaging, by the processor the soft start switch and maintain the main start switch in a position where mains electric power is provided to the first PSU if the measured voltage is above or below the predetermined range.

12. The method of claims 9 to 11, wherein the second PSU is a transformer comprising a plurality of primary windings operable to receive the mains electric power in the low voltage range or the high voltage range and a plurality of secondary windings operable to provide an output power, and the power supply further comprises a third switching means electrically coupled to the second PSU and to the computing means, the third switching means operable to select one of a plurality of taps on the primary windings of the second PSU such that the voltage of the output power on the second windings is constant, the method further comprising:
determining, by the processor, whether voltage in the low voltage range is above a first threshold voltage or whether the voltage in the high voltage range is above a second threshold voltage, or determining, by the processor, whether the voltage in the low voltage range is below a third threshold voltage or whether the voltage in the high voltage range is below a fourth threshold voltage; and
operating, by the processor, the third switching means when:
the voltage in the low voltage range is above the first threshold voltage,
the voltage in the high voltage range is above the second threshold voltage,
the voltage in the low voltage range is below the third threshold voltage, or
the voltage in the high voltage range is below the fourth threshold voltage.

13. The method of claim 12 further comprising:
selecting a low voltage tap of a first switch of the third switching means when the voltage in the low voltage range is at a predetermined low voltage or selecting a first tap of the first switch with more windings than the low voltage tap when the voltage in the low voltage range is above the first threshold voltage;
selecting a high voltage tap of a second switch of the third switching means when the voltage in the high voltage range is at a predetermined high voltage or selecting a second tap of the second switch with more windings than the high voltage tap when the voltage in the high voltage range is above the second threshold voltage;
selecting a low voltage tap of a third switch of the third switching means when voltage in the low voltage range is at the predetermined low voltage or selecting a third tap of the third switch with less windings than the low voltage tap when the voltage in the low voltage range is below the third threshold voltage; and/or
selecting a high voltage tap of a fourth switch of the third switching means when the voltage in the high voltage range is at the predetermined high voltage or selecting a fourth tap of the fourth switch with less windings than the high voltage tap when the voltage in the high voltage range is below the fourth threshold voltage.

14. The method of claims 10 to 13, further comprising:
receiving a command to switch the power supply to a low-power mode;
engaging, by the processor, the soft start switch;
subsequently operating, by the processor, the main start switch from the second PSU to the first PSU to switch on the first PSU while the second PSU is switched on;
subsequently disengaging the soft start switch to switch off the second PSU while the first PSU is switched on.

15. The method of claim 14, further comprising:
continuously measuring, by the processor, the voltage of the mains electric power input to the first PSU; and
operating, by the processor, the second switching means to the low voltage setting if the mains electric power is in the low voltage range or to the high voltage setting if the mains electric power is in the high voltage range.
